# EUROPEAN PATENT SPECIFICATION

(11) **EP 1 539 771 B1**
(45) Date of publication and mention of the grant of the patent: **27.12.2006**
(21) Application number: 03760669.6
(22) Date of filing: 20.06.2003
(51) Int. Cl.: C07F 7/18

(54) **SILYL ALKYL ESTERS OF ANTHRACENE- AND PHENANTHRENE CARBOXYLIC ACIDS**
SILYLALKYLESTER VON ANTHRACEN- UND PHENANTHRENCARBONSûUREN
ESTERS ALKYLIQUES SILYLES D'ACIDES ANTHRACENE ET PHENANTHRENE-CARBOXYLIQUES

(30) Priority: 21.06.2002 DE 10227807
(43) Date of publication of application: 15.06.2005
(73) Proprietor: Honeywell Specialty Chemicals Seelze GmbH, 30926 Seelze (DE)
(72) Inventor: LEHMANN, Lutz, Uwe, 30926 Seelze (DE); LONSKY, Ralph, 31535 Neustadt (DE)
(74) Representative: UEXKÜLL & STOLBERG
(86) International application number: PCT/EP2003/006534
(87) International publication number: WO 2004/000853

(56) References cited:
- WO-A-00/77575
- WO-A-03/044077
- WO-A-03/044600
- US-B1- 6 365 765
- DATABASE CA [Online] CHEMICAL ABSTRACTS SERVICE, COLUMBUS, OHIO, US; UNO, SEIJI ET AL: "Positive-working photoresist composition for upper resist layer of composite two-layer resist" retrieved from STN Database accession no. 134:318673 XP002255969 & JP 2001 109150 A (FUJI PHOTO FILM CO., LTD., JAPAN) 20 April 2001 (2001-04-20)

## Description

The present invention relates to silyl alkyl esters, particularly of anthracene- and phenanthrene carboxylic acids, a method for their preparation, compositions and polysiloxane compositions, which contain the silyl alkyl esters according to the invention and can be- used particularly in the semiconductor industry for the production of anti-reflective layers for photolithographic applications.

Progress in the semiconductor industry is based on the continuing development of new generations of integrated circuits which need to exhibit greater efficiency and functionality with ever-decreasing dimensions. This leads to new challenges in many processes conventionally used in semiconductor production. One of the most important of these processes is photolithography.

It has long been recognized that linewidth variations in patterns produced by photolithography can result from optical interference from light reflected by an underlying layer of a semiconductor wafer. Variations in thickness of the photoresist layer due to the topography of the subjacent substrate or layer also induce linewidth variations. In the prior art, anti-reflective layers applied under a photoresist layer have been used to prevent interference from reflection of the transmitted light irradiating beam. In addition, to some extent such layers are capable of planarizing the wafer topography and thus of producing a more uniform thickness of the photoresist layer, which contributes to less linewidth variations.

Organic polymers have already been employed in anti-reflective layers during irradiation of photoresist materials at the conventional wavelengths (365 nm, 436 nm) and also the shorter wavelengths (248 nm) used recently. However the fact that these share many chemical properties with the organic photoresists can limit usable process sequences. Furthermore they may intermix with photoresist layers, and additives have conventionally been introduced to avoid this. An example of suitable additives are thermosetting binders, as described in US-A-5, 693, 691.

Silicon oxynitrite is another material that has been used in anti-reflective layers and it works mainly by a destructive interference rather than by absorption, thus making it necessary to control very strictly the coating thickness. This makes it difficult to use it if highly uneven topographies are intended to be coated. Since silicon oxynitrite is typically deposited by chemical vapour deposition, while photoresist layers are typically applied using spin-techniques, the complexity of the semiconductor production is even increased.

Another class of materials are so-called spin-on-glass compositions. For example, US-A-5,100,503 discloses a solution of cross-linked polyorganosiloxane containing an inorganic pigment, e.g. TiO₂ amongst others, and an adhesion promoter. Although planarizing layers can be produced with such polyorganosiloxane-pigment combinations, they are not optimally suitable for exposure in the short-wave ultraviolet range, e.g. at 248 and 193 nm, which is increasingly used for the production of semiconductors with very small dimensions. Furthermore, not all inorganic pigments are suitable for the incorporation into different spin-on-glass compositions.

WO-A-00/77575 discloses spin-on-glass compositions containing a siloxane polymer and an incorporatable absorbing organic compound. For example, these compounds have a chromophore group with 1 to 3 condensed or non-condensed benzene rings, and a reactive group bonded to the chromophore group, e.g. hydroxy groups, amine groups, carboxylic acid groups and substituted silyl groups, with silicon bonded to one, two, or three alkoxy groups or to halogen. The reactive group may be directly bonded to the chromophore or the reactive group may be attached to the chromophore through a hydrocarbon bridge. These compounds, e.g. 9-anthracene carboxylic acid triethoxysilyl methyl ester, show strong absorption at wavelengths in the ultraviolet range, e.g. 193 nm, 248 nm or 365 nm, and are therefore also suitable for modern photolithographic processes. However, further improvement is required with regard to their hydrolytic and thermal stability, which is essential for the yield of technical syntheses, subsequent storage and the production of coating materials suitable for the spin-on-process, which normally takes place in aqueous-alcoholic media.

WO-A-00/77575 also discloses a method for the production of 9-anthracene carboxylic acid triethoxysilyl methyl ester, in which 9-anthracene carboxylic acid, chloromethyltriethoxysilane, triethylamine and a solvent are mixed and heated under reflux. On cooling of the reaction mixture a solid forms and a supernatant solution, with the latter containing the desired end product. However, this method requires further improvement with regard to yield and purity of the desired end product. For example, the synthesis of 9-anthracene carboxylic acid triethoxysilyl methyl ester yields a dark-brown oily liquid which contains only approx. 25 wt.-% silyl alkyl ester. In addition, the working-up of the reaction mixture is time-consuming as, in addition to decanting and removal of the solvent, a column chromatographic purification is necessary. Because of the stringent purity requirements in the semiconductor industry and for economic considerations, it is generally desirable to be able to isolate the above compounds in a higher purity and yield.

The object of the invention is therefore, firstly, to provide a light-absorbing compound, which has a strong absorption at wavelengths in the ultraviolet range, e.g. 193 and 248 nm, and is more stable with regard to hydrolytic and/or thermal influences than known compounds containing mono- or polynuclear aromatic hydrocarbon radicals as chromophore groups.

A further object of the invention is to provide a method for preparing silyl alkyl esters containing polynuclear condensed aromatic hydrocarbons as a chromophore group, with which an even higher yield of the desired final product can be obtained than with conventional methods. In particular the final pro-duct should have even higher purity than' is possible with known methods, in spite of a simpler working-up of the reaction mixture.

These objects are achieved by the silyl alkyl esters according to Claims 10 to 24 and by the method according to Claims 1 to 9.

In a first aspect, the silyl alkyl ester according to the invention having the formula (I) 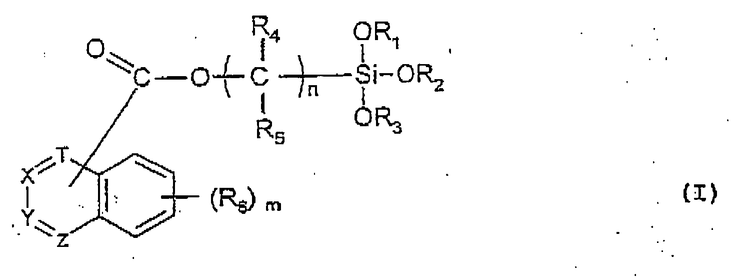 is characterized in that
R₁, R₂, and R₃ are equal or different and represent alkyl, aryl and heteroaryl,
R₄ and R₅ are equal or different and represent hydrogen, halogen, alkyl, aryl, and heteroaryl,
n is an integer from 3 to 5,
R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thio ether and nitro,
m is an integer from 0 to 4,
T, X, Y and Z each represent carbon,
a benzo group, which is being substituted m-fold with R₆ or is unsubstituted, is condensed on one of the bonds T-X, X-Y or Y-Z to form a trinuclear aromatic ring system, wherein the silyl alkyl ester group is substituted at the middle ring of said trinuclear aromatic ring system,
with the proviso that when m is O and an unsubstituted benzo group is condensed on the X-Y bond, then R₁, R₂, and R₃ are not all representing alkyl.

In a second aspect, the silyl alkyl ester according to the invention having the formula (I) 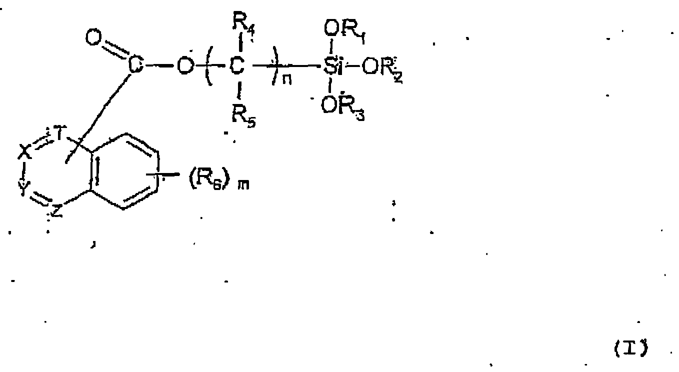 is characterized in that
R₁ R₂, and R₃ are equal or different and represent alkyl-, aryl and heteroaryl,
R₄ and R₅ are equal or different and represent hydrogen, halogen, alkyl, aryl and heteroaryl,
n is an integer from 1 to 10,
R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thioether and nitro,
m is an integer from 0 to 4,
T, X, Y and Z each represent carbon,
a benzo group, which is substituted m-fold with R₆ or which is unsubstituted, is condensed on either the T-X or Y-Z bond' to form a trinuclear aromatic ring system,
wherein the silyl alkyl ester group is substituted at the middle ring of said trinuclear aromatic ring system.

The method according to the invention for the preparation of a silyl alkyl ester having the formula (I) 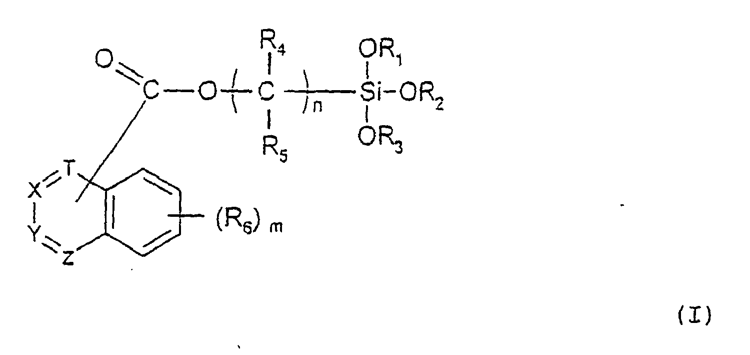 in which
R₁, R₂, and R₃ are equal or different and represent alkyl, aryl and heteroaryl, different and represent alkyl,
R₄ and R₅ are equal or different and represent hydrogen, halogen, alkyl, aryl and heteroaryl,
n is an integer from 1 to 10,
R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thioether and nitro,
m is an integer from 0 to 4,
T, X, Y and Z each represent carbon,
a benzo group, which is substituted m-fold with R₆ or is unsubstituted, is condensed on one of the bonds T-X, X-Y or Y-Z to form a trinuclear aromatic ring system, wherein the silyl alkyl ester group is substituted at the middle ring of said trinuclear aromatic ring system,
is characterized in that a carboxylic acid salt having the formula (II) 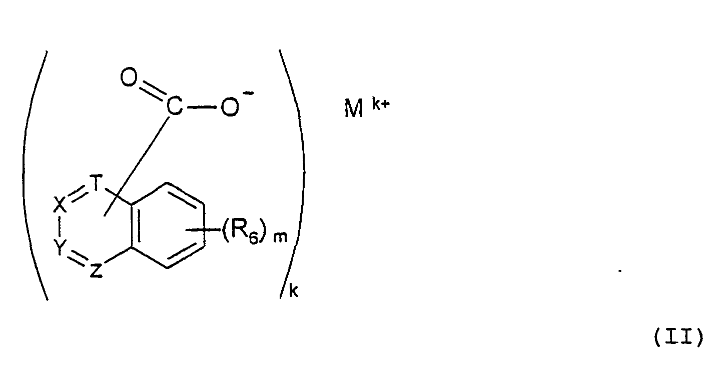 in which k is an integer from 1 to 4 and M is a metal,
is reacted with an organosilicon compound of the formula (III) 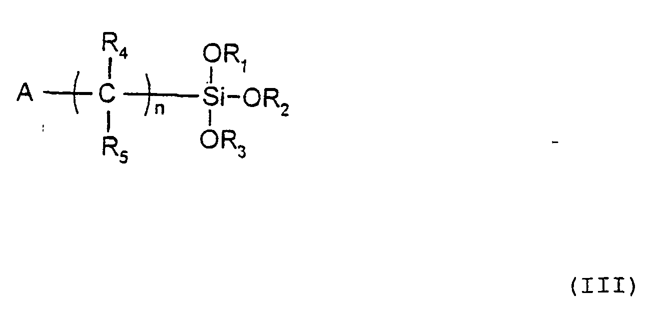 in which A is a nucleofugal leaving group.

A further object of the invention is a composition, particularly a solution, which contains at least one silyl alkyl ester according to the invention and at least one additional reactive silane.

Another object of the invention is a method for the preparation of a polysiloxane composition, particularly a polysiloxane solution, wherein the composition according to the invention is provided and the silyl alkyl ester is condensed with the reactive silane.

Yet another object is a polysiloxane composition, particularly a polysiloxane solution which is obtainable by the above method.

The invention also relates to a coated substrate, which is obtainable by a method comprising applying the composition or polysiloxane composition according to the invention to the substrate (e.g. a semiconductor device or silicon wafer) and heating the substrate with the composition or polysiloxane composition applied thereon.

Furthermore, the invention relates to the use of the above composition and the polysiloxane composition for preparation of a coating on any substrate, particularly for the preparation of anti-reflective layers on a semiconductor device or a silicon wafer.

Finally, the invention relates to an improved method for the photolithographic production of an integrated circuit pattern.

Surprisingly, it has been found that the silyl alkyl esters according to the invention are more stable with regard to hydrolytic and thermal influences than conventionally synthesized compounds, which contain polynuclear condensed aromatic hydrocarbon radicals as chromophore groups. In addition they have a strong light-absorption, particularly in the ultraviolet range, e.g. at wavelengths of 193 and 248 nm. This enables their use in anti-reflective coating materials for photolithographic applications, particularly in the production of semiconductor devices which are exposed to the above wavelengths.

The compounds according to the invention represented by Formula (I) are silyl alkyl esters of carboxylic acids of a trinuclear condensed aromatic hydrocarbon.

The radicals R₁, R₂, and R₃ are equal or different and represent alkyl, aryl and heteroaryl. In a preferred embodiment the radicals R₁, R₂, and R₃ each represent alkyl, yet more preferably linear or branched alkyl having 1 to 6 carbon atoms. In particular, the radicals R₁, R₂, and R₃ are selected, independently of one another, from methyl, ethyl, n-propyl, iso-propyl, butyl, 2-methylpropyl (iso-butyl), 1-methylpropyl (sec.-butyl), and 1,1-dimethylethyl (tert.-butyl). It is preferred that the radicals R₁, R₂, and R₃ each represent methyl or ethyl, with ethyl being most preferred.

The radicals R₄ and R₅ in the bridging group are equal or different and represent hydrogen, halogen, alkyl, aryl and heteroaryl. Preferably R₄ and R₅ each represent hydrogen.

In case of silyl alkyl esters according to the second aspect, n is an integer from 1 to 10, preferably 1 to 5, more preferably 1 to 3, yet more preferably 1 or 3 and most preferably 3.

R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thio ether and nitro. Preferred substituents are halogen, alkyl, aryl, hydroxy, alkoxy and arylether, with halogen being particularly preferred.

Each of said hydrocarbon-containing radicals R₁ to R₆ can be branched or unbranched and carry further substituents, e.g. alkyl, which in turn can be branched or unbranched. m is an integer from 0 to 4, preferably from 0 to 2 and particularly from 0 to 1, with m = 0 being the most preferred.

T, X, Y, and Z each represent carbon. According to the first aspect, on one of the bonds T-X, X-Y, or Y-Z formed by these carbon atoms, a further benzo group, which is substituted m-fold with R₆ or is unsubstituted, is condensed to form a trinuclear aromatic ring system. The condensation with the unsubstituted or m-fold with R₆ substituted benzo group can be either linear on the X-Y bond, or angular on either the T-X or Y-Z bond. Accordingly, the trinuclear condensed aromatic hydrocarbon radical represents an anthracene or phenanthrene moiety. According to the second aspect, a benzo group, which is substituted m-fold with R₆ or which is unsubstituted, is condensed on either the T-X or Y-Z bond to form a trinuclear aromatic ring system.

The groups already mentioned above can be used.as substituent R₆ of the benzo group condensed on the' T-X, X-Y or Y-Z bonds which groups, however, can be selected independently of one another for the respective rings of the trinuclear condensed aromatic hydrocarbon radical.

The silyl alkyl ester group is substituted at the middle ring, i.e. bonded either on the 9- or on the 10-carbon atom of the anthracene or phenanthrene moiety. Preferably the silyl alkyl ester group is bonded on the 9-carbon atom.

The other respective position of the middle ring can likewise carry a substituent which can preferably be selected from the radicals already listed for the substituent R₆. It is preferred that the anthracene or phenanthrene moiety is substituted on the 10-carbon atom.

In a yet more preferred embodiment of the silyl alkyl ester according to the invention, an unsubstituted benzo group is condensed either on the X-Y bond or on either the T-X or Y-Z bond, and in each case m = 0. This means that the whole condensed aromatic ring system, with the exception of the silyl alkyl ester group on the 9- or 10-carbon atom, carries no substituents.

Therefore, in the formula (I) an anthracene or phenanthrene radical, which is substituted on the respective 9-carbon atom with the silyl alkyl ester group is most preferred as trinuclear condensed aromatic hydrocarbon radical. In the case of a phenanthrene radical 9-phenanthrene carboxylic acid (trimethoxysilyl) methyl ester, 9-phenanthrene carboxylic acid (triethoxysilyl)- methyl ester, 9-phenanthrene carboxylic acid (triethoxysilyl)- propyl ester, or 9-phenanthrene carboxylic acid (triethoxysilyl)-' propyl ester are examples of particularly preferred silyl alkyl esters according to the invention.

The silyl alkyl esters according to the invention can generally be used as light-absorbing agents, particularly for absorption in the ultraviolet light range. Surprisingly, silyl alkyl esters according to the invention, in which the trinuclear condensed aromatic hydrocarbon radical is a phenanthrene radical, show particularly wide absorption in the ultraviolet light range. They absorb not only at a wavelength of 248 nm like the compounds based on an anthracene radical, but also at 193 nm. Generally this enables them to be used as light-absorbing agents in modern photolithographic processes, e.g. in the manufacture of semiconductors, wherein the photoresist layers are exposed to the abovementioned wavelengths but wherein shorter wavelengths, e.g. 193 nm, are particularly desirable for the production of patterns with ever decreasing linewidths. In addition the silyl alkyl esters according to the invention exhibit absorption over an approx. 10nm-wide range around the wavelengths 248 nm and 193 nm, which is also highly significant for photolithographic applications. Absorbing compounds with narrow absorption peaks, e.g. with a width of less than 2 nm around the abovementioned wavelengths, have proved less suitable.

It was also surprising that silyl alkyl esters according to the invention, in which in Formula (I) n = 3 and R₄ and R₅ each represent hydrogen, i.e. the silyl group is attached to the ester group via a propylene group, both in the case of compounds based on an anthracene and on a phenanthrene radical, have higher hydrolytic and thermal stability than corresponding compounds with n = 1.

The composition according to the invention contains at least one of the silyl alkyl esters according to the invention described above, and at least one further reactive silane. For example, such compositions are suitable as starting materials for the preparation of coatings used in photolithographic processes, e.g. in semiconductor production, which are intended to avoid interference caused by reflection of transmitted light.

The reactive silane is preferably selected from alkoxysilanes and halogen silanes. Suitable alkoxysilanes are for example selected from triethoxysilane (HTEOS), tetraethoxysilane (TEOS), methyltriethoxysilane (MTEOS), dimethyldiethoxysilane, tetramethoxysilane (TMOS), methyltrimethoxysilane (MTMOS), trimethoxysilane, dimethyldimethoxysilane, phenyltriethoxysilane (PTEOS), phenyltrimethoxysilane (PTMOS), diphenyldiethoxysilane and diphenyldimethoxysilane.

Preferred halogen silanes are chlorosilanes, e.g. trichlorosilane, methyltrichlorosilane, ethyltrichlorosilane, phenyltrichlorosilane, tetrachlorosilane, dichlorosilane, methyldichlorosilane, dimethyldichlorosilane, chlorotriethoxysilane, chlorotrimethoxysilane, chloromethyltriethoxysilane, chloroethyltriethoxysilane, chlorophenyltriethoxysilane, chloromethyltrimethoxysilane, chloroethyltrimethoxysilane and chlorophenyltrimethoxysilane. It is yet more preferred that the reactive silane is selected from triethoxysilane (HTEOS), tetraethoxysilane (TEOS), methyltriethoxysilane (MTEOS) tetramethoxysilane (TMOS), methyltrimethoxysilane (MTMOS), phenyltriethoxysilane (PTEOS) and phenyltrimethoxysilane (PTMOS). Tetraethoxysilane (TEOS) and/or methyltriethoxysilane (MTEOS) are most preferred.

In a preferred embodiment the composition according to the invention is present in the form of a solution. Consequently the composition preferably contains a solvent or a solvent mixture. It is preferred that the solvent or solvent mixture contains at least one component selected from water, linear or branched alkyl alcohol having 1 to 6 carbon atoms, linear or branched ketone having 1 to 6 carbon atoms, linear or branched carboxylic acid ester having 1 to 6 carbon atoms and linear or branched carboxylic acid amide having 1 to 6 carbon atoms. It is yet more preferred that the solvent or solvent mixture contains at least one component selected from water, acetone, 1-propanol, 2-propanol, butanol, methylisobutylketone, methoxypropanol, propoxypropanol, ethyl acetate and propyl acetate. The most preferred are water, acetone, 1-propanol, 2-propanol and/or butanol. By "butanol" is also meant all isomers of 1-butanol, e.g. 2-butanol or 2-methyl-1-propanol.

Furthermore, the composition according to the invention preferably contains an aqueous solution of at least one protonic acid and/or an aqueous solution of at least one acid anhydride. An aqueous solution of at least one protonic acid, e.g. an aqueous nitric acid solution (e.g. 0.1 M-aqueous nitric acid solution) is preferred. Examples of other suitable protonic acids and acid anhydrides are acetic acid, formic acid, phosphoric acid, hydrochloric acid and acetic acid anhydride.

Suitable amounts of the above mentioned components in the composition according to the invention, which can be selected independently of one another, are as follows:
- 0.5 to 10 wt.-% (more preferably 1 to 4 wt.-% and yet more preferably 2 to 3 wt.-%) silyl alkyl ester according to the invention,
- 1 to 30 wt.-% (more preferably 5 to 20 wt.-% and yet more preferably 5 to 15 wt.-%) reactive silane,
- 60 to 98 wt.-% (more preferably 80 to 95 wt.-% and yet more preferably 85 to 90 wt.-%) solvent or solvent mixture and
- 10⁻⁵ to 5·10⁻³ wt.-% (more preferably 10⁻⁴ to 10⁻³ wt.-% and yet more preferably 10⁻⁴ to 3·10⁻⁴ wt.-%) protonic acid and/or acid anhydride.

Usually, the at least one protonic acid and/or the at least one acid anhydride is added in the form of an aqueous solution, e.g. 0.001 to 0.5 wt.-%, preferably 0.01 to 0.1 wt.-% and yet more preferably 0.01 to 0.03 wt.-% of a 1 wt.-% aqueous solution of these components.

In certain cases it may be an advantage for the composition according to the invention to contain auxiliary agents, e.g. wetting agents. Suitable wetting agents are alkyl and aryl sulfonic acids, alkyl and aryl carboxylic acids, partially fluorinated or perfluoro alkyl and aryl sulfonic acids and partially fluorinated or perfluoro alkyl and aryl carboxylic acids each having a long-chain as well as their respective salts. Preferably, the amount of auxiliary agents in the composition according to the invention is 0.001 to 1 wt.-% and more preferably 0.01 to 0.1 wt.-%.

The amounts of the components mentioned, given in wt.-% relate to the weight of the total composition.

The composition according to the invention is preferably produced in such a way that the starting materials are added in any order, and optionally mixed/homogenized, using methods known to those skilled in the art. For example, only silyl alkyl ester according to the invention, reactive silane and solvent or solvent mixture may be mixed first, and the aqueous solution of at least one protonic acid and/or aqueous solution of at least one acid anhydride added subsequently.

In the method according to the invention, for the preparation of a polysiloxane composition, particularly a polysiloxane solution, the composition described above is provided and the silyl alkyl ester is condensed with the reactive silane. Generally, a linear and/or cross-linked polyorganosiloxane is formed, which in the following is also referred to as glass matrix. The condensation of the silyl alkyl ester with the reactive silane is preferably controlled in such a way that polysiloxane with a low molecular weight and degree of cross-linking is formed, which is dissolved or suspended in the solvent or solvent mixture.

In a further preferred embodiment, the condensation of the silyl alkyl ester with the reactive silane is carried out by heating. For this purpose the composition according to the invention is preferably heated for 1 to 24 hours, more preferably 1 to 10 hours and yet more preferably 2 to 6 hours at a temperature of 20 to 100°C, more preferably 40 to 80°C and yet more preferably 60 to 80°C. It is also possible simply to heat the composition according to the invention under reflux, so that the required temperature range is determined by the boiling point of the solvent or solvent mixture used. Depending on the proportions of the individual components in the composition according to the invention, different temperatures and reaction times are required, in order to obtain preferably short-chained and slightly cross-linked polyorganosiloxane. This can be optimized by skilled persons in a few steps. The desired degree of cross-linking can be monitored, e.g. by viscosity measurements.

If the polysiloxane composition according to the invention is applied on a substrate, e.g. a semiconductor wafer, a hard (glass-like) coating can be produced by heating, in which polysiloxane with a higher molecular weight and degree of cross-linking is present.

The light-absorbing silyl alkyl ester according to the invention can either be incorporated in the interstices of the glass matrix or chemically bonded to the polysiloxane. It is assumed that the accessible reactive group of the compounds according to the invention enables chemical bonding to the polysiloxane and this has a particularly advantageous effect on the anti-reflective properties of the coatings.

It may possibly also be advantageous, during preparation of the polysiloxane composition to add a diluting solvent during or after the condensation. This is because, by varying the amount of solvent (including diluting solvent) in the polysiloxane composition, it is possible to adjust the thickness of a coating applied to a substrate. Suitable diluting solvents are methanol, ethanol, 2-propanol, butanol, acetone, propyl acetate, ethyl lactate, propylene glycol propyl ether, diacetone alcohol and methoxypropanol. Diluting solvents with high boiling points are preferred, such as ethyl lactate and propylene glycol propyl ether, presumably because these reduce the probability of bubble formation in the coatings. On the other hand, solvents with lower boiling points lead to cavities if they are enclosed under a cross-linked top layer and consequently again escape due to burning process required for hardening.

Instead of the above single-stage method it is also possible to mix the above mentioned components of the composition according to the invention and optionally diluting solvent in stages in any order, and to condense after any, several, or each individual addition stage.

It may possibly also be necessary to separate solid, insoluble components from the polysiloxane composition, e.g. using standard filtration techniques, before they are available for final use.

The composition according to the invention and the polysiloxane composition according to the invention, which is obtainable by the method described above, can be used particularly for the preparation of a coating on any substrate, for instance a semiconductor device, a silicon wafer, a glass plate, a metal plate and the like. Any coating method known to persons skilled in the art is suitable for the application, e.g. the spin method, roller-coater method, dip and pull-up method, spray method, screen printing method and brushing method. The composition and the polysiloxane composition according to the invention is preferably applied to the substrate and the substrate with said composition or polysiloxane composition applied thereon is heated. In semiconductor production, spin methods are typically used for the application. Such methods include a first spin to apply the coating materials and a second spin to form a layer with a specific thickness. This is followed by at least one thermal burning stage to produce the hard (glass-like) layer. Typical processes operate with the second spin at 1000 to 4000 rpm for approx. 20 seconds and with two or three burning stages at temperatures of 80 to 300°C for approx. 1 minute in each case.

The layers thus produced exhibit light-absorbing and anti-reflective properties. In addition they are suitable to planarize the uneven topography of a substrate or a subjacent layer so that variations in the thickness of the layer or layers lying on top can be reduced,

The method according to the invention for the photolithographic production of an integrated circuit pattern on a substrate comprises the steps of:
(a) radiating a stack through a mask, said stack comprising the lower substrate, an upper photoresist layer, at least one anti-reflective layer formed from the composition or from the polysiloxane composition according to the invention, and optionally at least one further layer to be structured, each being located between said substrate and said photoresist layer,
(b) developing the exposed stack to produce openings in said photoresist layer,
(c) etching a first pattern through said openings in said at least one anti-reflective layer and optionally at least one further layer to be structured, and
(d) stripping off said photoresist layer, at least one anti-reflective layer and optionally at least one further layer to be structured to produce the integrated circuit pattern.

Preferably, the substrate is a semi-conductor device or a silicon wafer. It is further preferred that in step (a) the stack is radiated with ultraviolet light having a wavelength of less than 260 nm, particularly 193 nm or 248 nm. Suitable materials and methods to perform the radiating, developing, etching and stripping steps are well-known to those skilled in the art. For further details reference is made to the aforemetioned WO-A-00/77575.

The method according to the invention for the preparation of a silyl alkyl ester of Formula (I) 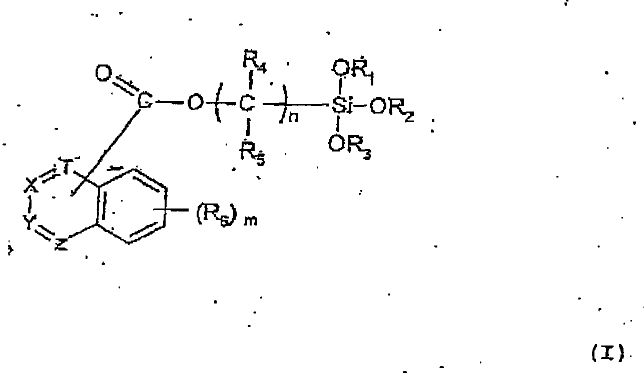 in which.
R₁, R₂, and R₃ are equal or different and represent alkyl, aryl and heteroaryl,
R₄ and R₅ are equal or different and represent hydrogen, halogen, alkyl, aryl and heteroaryl,
n is an integer from 1 to 10,
R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thioether and nitro,
m is an integer from 0 to 4, T, X, Y and Z each represent carbon,
a benzo group, which is m-fold substituted with R₆ or which is unsubstituted, is condensed on one of the bonds
T-X, X-Y or Y-Z to form a trinuclear aromatic ring system,
wherein the silyl alkyl ester group is substituted at the middle, ring of said trinuclear aromatic ring system, comprises the reacting of a caboxylic acid salt of Formula (II) 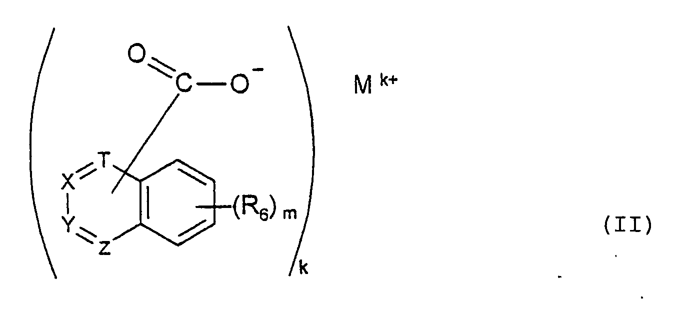 in which k is an integer from 1 to 4 and M is a metal,
with an organosilicon compound of Formula (III) 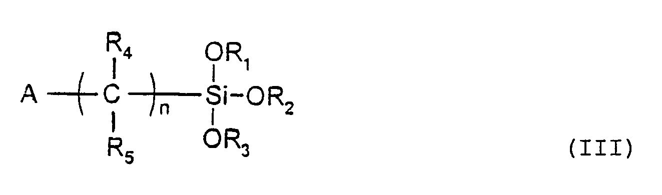 in which A represents a nucleofugal leaving group.

In the carboxylic acid salt of Formula (II), the metal M is preferably selected from the groups Ia, IIa, IIIa, IVa, Ib, IIb, IVb and VIIIb of the periodic table. M is particularly a monovalent metal, i.e. k = 1. It is preferred that M is selected from metals of the Group Ia, more preferably from lithium, sodium and potassium and yet more preferably from sodium and potassium, with potassium being the most preferred.

R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thioether and nitro. Preferred substituents are halogen, alkyl, aryl, hydroxy, alkoxy and arylether, with halogen being particularly preferred.

m is an integer from 0 to 4, preferably from 0 to 2 and particularly from 0 to 1, with m = 0 being most preferred.

Furthermore, in Formula (II), T, X, Y and Z each represent carbon. On one of the bonds formed by these carbon atoms, T-X, X-Y, or Y-Z, a further benzo group, which is substituted m-fold with R₆ or is unsubstituted, is condensed to form a trinuclear aromatic ring system. The condensation with the benzo group, which is substituted m-fold with R₆ or unsubstituted, can be either linear on the X-Y bond, or angular on either the T-X or Y-Z bond. Accordingly, the trinuclear condensed aromatic hydrocarbon radical is an anthracene or phenanthrene moiety.

The groups already mentioned above can be used as substituent R₆ of the condensed benzo group on the T-X, X-Y or Y-Z bonds. These can be selected independently of one another for the respective rings of the trinuclear condensed aromatic hydrocarbon radical.

The carboxylate group is substituted on the middle ring, i.e. either on the 9- or on the 10-carbon atom of the anthracene or phenanthrene moiety. The carboxylate group is preferably substituted on the 9-carbon atom.

The other respective position of the middle ring can likewise carry a substituent which can preferably be selected from the radicals already listed for the substituent R₆. It is preferred that the anthracene or phenanthrene moiety is substituted on the 10-carbon atom.

It is yet more preferred that an unsubstituted benzo group is condensed either on the X-Y bond or on either the T-X or Y-Z bond, and in each case m = 0. This means that the whole condensed aromatic ring system carries no substituents, with the exception of the carboxylate group on the 9- or 10-carbon atom.

Thus, an anthracene or phenanthrene radical, which is substituted on the respective 9-carbon atom with the carboxylate group, is most preferred as trinuclear condensed aromatic hydrocarbon radical in the carboxylic acid salt of Formula (II).

Particularly preferred carboxylic acid salts of Formula (II) are selected from 9-anthracene carboxylic acid-sodium salt, 9-anthracene carboxylic acid-potassium salt, 9-phenanthrene carboxylic acid-sodium salt and 9- phenanthrene carboxylic acid-potassium salt.

In the organosilicon compound of Formula (III) A represents a nucleofugal leaving group. Preferably, A is selected from halogen, hydroxy, alkoxy, arylether, substituted and unsubstituted amino group, thio, thioether, carboxylic acid ester group (e.g. acetate or trifluoroacetate), alkyl sulfonate (e.g. methane sulfonate or mesylate) and aryl sulfonate (e.g. 4-methylbenzenesulfonate or tosylate). It is preferred that the nucleofugal leaving group A represents halogen, more preferably chlorine and/or bromine, with chlorine being most preferred. In general n is an integer from 1 to 10, preferably 1 to 5, more preferably 1 to 3, and most preferably 3. The groups which can be used as R₁, R₂, R₃, R₄ and R₅ radicals are those already discussed in connection with the silyl alkyl esters according to the invention.

According to a preferred embodiment of the method according to the invention, the carboxylic acid salt of Formula (II) is reacted with the organosilicon compound of Formula (III) in a solvent or solvent mixture, from which the metal salt of the formula MA_{K} formed is precipitated. In addition, it is particularly advantageous if the desired final product, the silyl alkyl ester according to the invention, remains dissolved/suspended in the solvent or solvent mixture. All the usual solvents can be used for this. However, it is preferred that the solvent or solvent mixture contains at least one component selected from dipolar aprotic solvents, with N,N-dimethylformamide, N,N-dimethylacetamide, N-methylpyrrolidone, dimethylsulfoxide, 1,3-dimethyl-2-imidazolidinone, tetramethyl urea and tetrahydrothiophene-1,1-dioxide (Sulfolan) being more preferred. Most preferred are N,N-dimethylformamide and/or N,N-dimethylacetamide.

The molar ratio of the carboxylic acid salt (II) to the organosilicon compound (III) is preferably 1:1 to 1:2 and more preferably 1:1. Preferably, the reaction of the compounds (II) and (III) is carried out for 0.5 to 15 hours, more preferably 1 to 4 hours at temperatures of 60 to 200°C, more preferably 100 to 140°C.

Surprisingly, using the above method, it was possible to obtain silyl alkyl esters with a greater purity and yield than was possible with conventional processes. As, during reaction of the carboxylic acid salt of Formula (II) with the organosilicon compound of Formula (III) a metallic salt which is insoluble in the solvent or solvent mixture is formed (e.g. an alkali metal halogenide), this can be continuously removed from the reaction vessel during the reaction, and thus the reaction equilibrium can be shifted practically completely to the product side so that the yield is quantitative.

To isolate the desired final product, the reaction mixture can be worked up with usual methods. A very high purity of the final product requires, for example, the removal of mechanical impurities or impurities caused by metals in the ppm-range. This can optionally be carried out by vacuum distillation, more preferably by distillation techniques for the preparation of extremely pure products known to those skilled in the art, particularly thin film or molecular evaporation (e.g. using rotating strip or spinning band columns), or by recrystallization. Hydrocarbons or hydrocarbon mixtures are suitable for recrystallization, with hexane, heptane, octane, cyclohexane and methylcyclohexane being preferred.

The preparation of the silyl alkyl esters according to the invention suitably takes place in an inert gas atmosphere (e.g. nitrogen) to reduce oxidation by atmospheric oxygen (e.g. of the anthracene/phenanthrene radical to an anthraquinone/phenanthrenequinone radical) and humidity, which hydrolyses the ester group. In addition, it is preferred to work in the absence of light, as, for example, anthracene compounds can dimerise during exposure as the result of a photochemical reaction.

The following examples illustrate the present invention. Unless otherwise indicated, all percentages relate to weight.

### Examples

In principle all syntheses and working-up steps were carried out under inert gas (e.g. nitrogen) and exclusion of humidity and light. The reagents used were dried before use. The products obtained were kept under inert gas in the absence of humidity and light.

### Example 1a: Synthesis according to the invention of 9-anthracene carboxylic acid (triethoxysilyl) methyl ester

5 g 9-anthracene carboxylic acid-potassium salt were suspended in 50 ml N,N-dimethylformamide. 5 ml chloromethyltriethoxysilane were added. The mixture was stirred at 100°C for 1 hour, then cooled to 20°C, drawn off by suction, and the residue washed with 60 ml n-heptane. The combined filtrates were concentrated under vacuum, 50 ml n-heptane were added, stirred for 15 min., then drawn off by suction, the residue washed with n-heptane and the combined filtrates concentrated under vacuum. The residue was dried under vacuum at 0.01 mbar. The yield was quantitative. Purity was above 95% (GC). Light-yellow solid; Fp.: 63°C; Bp: 190°C/0.01 mbar.

### Example 1b: Synthesis of 9-anthracene carboxylic acid (triethoxysilyl) methyl ester (comparative)

9-anthracene carboxylic acid (triethoxysilyl) methyl ester was produced according to Example 14 on page 18 of WO 00/77575 A1. A dark-brown oily liquid was obtained in a yield of approx. 53%. The NMR analysis of this oil gave a yield of approx. 25% (relative to the oil) 9-anthracene carboxylic acid (triethoxysilyl) methyl ester.

A comparison of both methods shows that the preparation according to the invention is superior in terms of the yield and purity of the final product as it yields a light-yellow solid with a melting point of 63°C and a content of the desired compound of over 95%. To achieve such a yield and purity, only a filtration and removal of solvent is necessary. The working up of the reaction mixture is thereby simplified compared with the process known from the state of the art in which, in addition to the decanting and removal of the solvent, a time-consuming column-chromatographic purification must be carried out. To achieve an even higher purity, a further purification can be carried out through recrystallization or distillation in the process according to the invention.

### Example 2: 9-phenanthrene carboxylic acid(triethoxysilyl) methyl ester

5 g 9-phenanthrene carboxylic acid-potassium salt were suspended in 50 ml N,N-dimethylformamide. 5 ml chloromethyltriethoxysilane were added. The mixture was stirred at 120°C for 1 hour, then cooled to 20°C, drawn off by suction, and the residue washed with 60 ml n-heptane. The combined filtrates were concentrated under vacuum. 50 ml n-heptane were added, stirred for 15 min., then drawn off by suction, the residue washed with n-heptane and the combined filtrates concentrated under vacuum. The residue was dried under vacuum at 0.01 bar. The yield was quantitative. Purity was above 95% (GC). Light-yellow solid; Fp.: 26°C.

### Example 3: 9-anthracene carboxylic acid-3-(triethoxysilyl) propyl ester

5 g 9-anthracene carboxylic acid-potassium salt were suspended in 50 ml N,N-dimethylacetamide. 5.6 ml (3-chloropropyl) triethoxysilane were added. The mixture was stirred at 100°C for 2 hours, then cooled to 20°C, drawn off by suction, and the residue washed with 60 ml toluene. The combined filtrates were concentrated under vacuum, 50 ml toluene were added, stirred for 15 min., then drawn off by suction, the residue washed with toluene and the combined filtrates concentrated under vacuum. The residue was dried under vacuum at 0.01 mbar. The yield was quantitative. Purity was above 95% (GC). Yellow liquid; Fp.: < 25°C; Bp: 210°C/0.01 mbar.

### Example 4: 9-anthracene carboxylic acid-3-(trimethoxysilyl) propyl ester

5 g 9-anthracene carboxylic acid-sodium salt were suspended in 50 ml N,N-dimethylformamide. 4.7 ml (3-chloropropyl) trimethoxysilane were added. The mixture was stirred at 120°C for 2 hours, then cooled to 20°C, drawn off by suction, and the residue washed with 60 ml n-hexane. The combined filtrates were concentrated under vacuum, 50 ml toluene were added, stirred for 15 min., then drawn off by suction, the residue washed with n-hexane and the combined filtrates concentrated under vacuum. The residue was dried under vacuum at 0.01 mbar. The yield was quantitative. Purity was above 95% (GC). Yellow liquid; Fp.: < 25°C; Bp: 205°C/0.01 mbar.

## Claims

1. Method for the preparation of a silyl alkyl ester having the Formula (I) 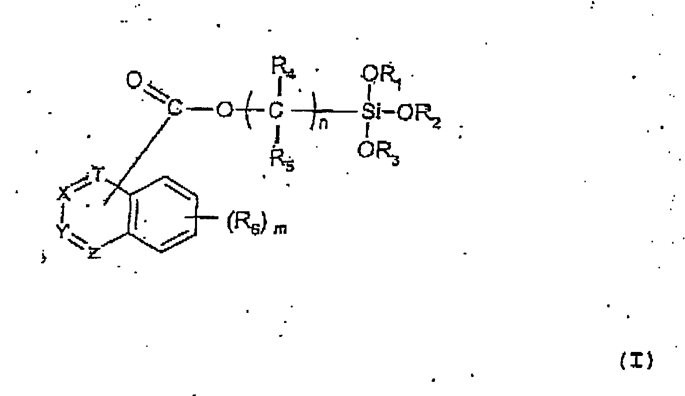 in which,
R₁, R₂, and R₃ are equal or different and represent alkyl, aryl and heteroaryl,
R₄ and R₅ are equal or different and represent hydrogen, halogen, alkyl, aryl and heteroaryl,
n is an integer from 1 to 10,
R₆ is a substituent selected from halogen, alkyl, aryl, heteroaryl, hydroxy, alkoxy, arylether, substituted and unsubstituted amino groups carboxy group, carboxylic acid ester group, carboxylic acid amide group, sulfonic acid group, sulfonic acid ester group, sulfonyl, thio, thioether and nitro,
m is an integer from 0 to 4,
T, X, Y and Z each represent carbon,
a benzo group, which is m-fold substituted with R₆ or which is unsubstituted, is condensed on one of the bonds T-X, X-Y or Y-Z to form a trinuclear aromatic ring system,
wherein the silyl alkyl ester group is substituted at the middle ring of said trinuclear aromatic ring system,
wherein a carboxylic acid salt of Formula (II) 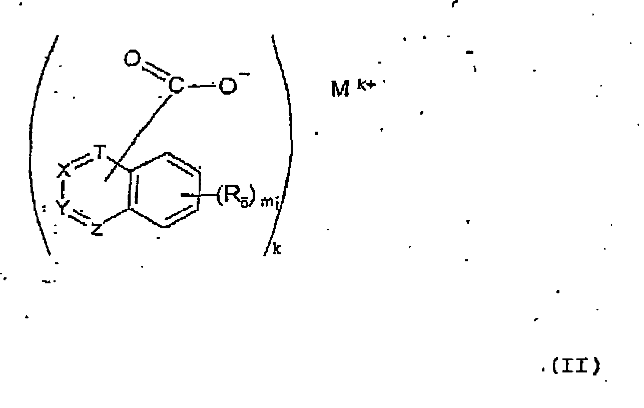 in which k is an integer from 1 to 4 and M is a metal, is reacted with an organosilicon compound of Formula (III) 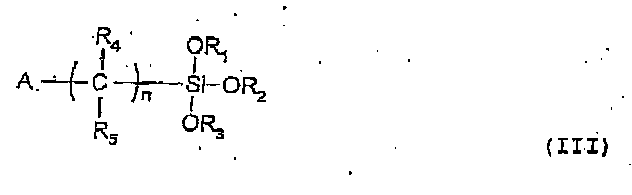 in which A represents a nucleofugal leaving group,

2. Method according to Claim 1, wherein the metal M is selected from the groups Ia, IIa, IIIa, IVa, Ib, IIb, IVb and VIIIb of the periodic table.

3. Method according to Claim 1 or 2, wherein k = 1.

4. Method according to any one of Claims 1 to 3, wherein M is selected from metals of Group Ia.

5. Method according to any one of Claims 1 to 4 wherein the metal M is selected from lithium, sodium and potassium.

6. Method according to any one of Claims 1 to 5 wherein the metal M is sodium and/or potassium and particularly potassium.

7. Method according to any one of Claims 1 to 6 wherein the nucleofugal leaving group A represents halogen, preferably chlorine and/or bromine and yet more preferably chlorine.

8. Method according to any one of Claims 1 to 7 wherein the carboxylic acid salt of Formula (II) is reacted with the organosilicon compound of Formula (III) in a solvent or solvent mixture, from which the metal salt of the formula MA_{K} formed is precipitated.

9. Method according to Claim 8, wherein as solvent or solvent mixture, N,N-dimethylformamide and/or N,N-dimethylacetamide is used.

10. Silyl alkyl ester having the formula (I) 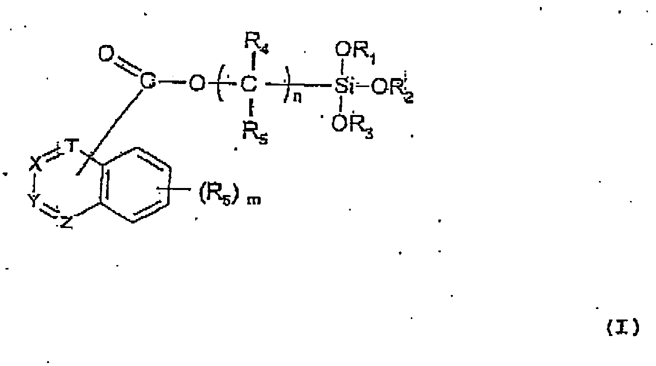 wherein
R₁, R₂, and R₃ are equal or different and represent alkyl, aryl and heteroaryl,
R₄ and R₅ each represent hydrogen,
n is an integer from 3 to 5,
R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic, acid group, sulfonic acid ester group, sulfonyl, thio, thioether and nitro,
m is an integer from 0 to 4,
T, X, Y and Z each represent carbon,
a benzo group, which is substituted m-fold with R₆ or which is unsubstituted, is condensed on one of the bonds T-X, X-Y or Y-Z to form a trinuclear aromatic ring system,
wherein the silyl alkyl ester group is substituted at the middle ring of said trinuclear aromatic ring system with the proviso that when m is 0 and an unsubstituted benzo group is condensed on the X-Y bond, then R₁, R₂, and R₃ are not all representing alkyl.

11. Silyl alkyl ester according to Claim 10, wherein R₁, R₂, and R₃ each represent alkyl.

12. Silyl alkyl ester according to Claim 10 or 11, wherein R₁, R₂, and R₃ are selected, independently of one another, from methyl, ethyl, n-propyl, iso-propyl, n-butyl, 2-methylpropyl, 1-methylpropyl and 1,1-dimethylethyl.

13. Silyl alkyl .ester according to any one of Claims 10 to 12, wherein R₁, R₂, and R₃ each represent methyl or ethyl.

14. Silyl alkyl ester according to any one of Claims 10 to' 13, wherein a benzo group, which is m-fold substituted with R₆ or which is unsubstituted, is condensed on the X-Y bond.

15. Silyl alkyl ester according to Claim 14, wherein an unsubstituted benzo group is condensed on the X-Y bond and m=0.

16. Silyl alkyl ester according to any one of Claims 10 to 13, wherein a benzo group, which is m-fold substituted with R₆ or which is unsubstituted, is condensed on either the T-X or Y-Z bond.

17. Silyl alkyl ester according to Claim 16, wherein an unsubstituted benzo group is condensed on either the T-X or Y-Z bond and m=0.

18. Silyl alkyl ester having the formula (I) 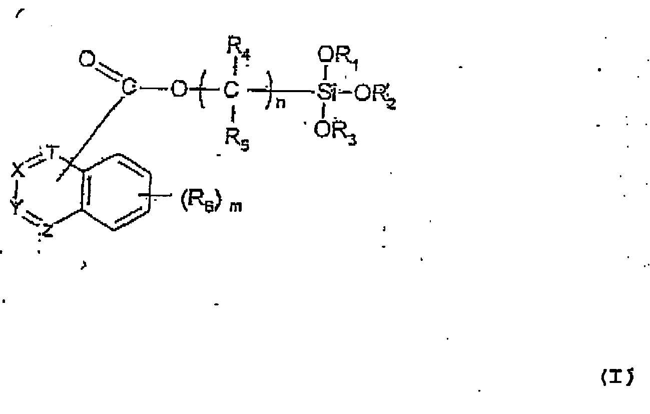 wherein
R₁, R₂, and R₃ are equal or different and represent alkyl, aryl and heteroaryl,
R₄ and R₅ are equal or different and represent hydrogen, halogen, alkyl, aryl and heteroaryl,
n is an integer from 1 to 10,
R₆ is a substituent selected from halogen, alkyl, aryl, heteroaryl, hydroxy, alkoxy, arylether, substituted and unsubstituted amino group, carboxy group, carboxylic acid ester group, carboxylic acid amide group, sulfonic acid group, sulfonic acid ester group, sulfonyl, thio, thioether and nitro,
m is an integer from 0 to 4,
T, X, Y and Z each represent carbon,
a benzo group, which is substituted m-fold with R₆ or which is unsubstituted, is condensed on either the T-X or Y-Z bond' to form a trinuclear aromatic ring system,
wherein the silyl alkyl ester group is substituted at the middle ring of said trinuclear aromatic ring system.

19. Silyl alkyl ester according to Claim 18, wherein R₁, R₂, and R₃ each represent alkyl.

20. Silyl alkyl ester according to Claim 18 or 19, wherein R₁, R₂, and R₃ are selected, independently of one another, from methyl, ethyl, n-propyl, iso-propyl, n-butyl, 2-methylpropyl, 1-methylpropyl and 1,1-dimethylethyl.

21. Silyl alkyl ester according to any one of Claims 18 to 20, wherein R₁, R₂, and R₃ each' represent methyl or ethyl.

22. silyl alkyl ester according to any one of Claims 18 to 21, wherein R₄ and R₅ each represent hydrogen.

23. Silyl alkyl ester according to any one of Claims 18 to 22, wherein n is an integer from 1 to 5, particularly from 1 to 3, yet more preferably 1 or 3 and most preferably 3.

24. Silyl alkyl ester according to any one of Claims 18 to 23, wherein an unsubstituted benzo group is condensed on either the T-X or Y-Z bond and m=0.

25. Composition which comprises at least one silyl alkyl ester according to any one of Claims 10 to 24 and at least one further reactive silane.

26. Composition according to Claim 25, wherein the reactive silane is selected from alkoxysilanes and halogen silanes, particularly chlorosilanes.

27. Composition according to Claim 25 or 26, wherein the reactive silane is selected from triethoxysilane (HTEOS), tetraethoxysilane (TEOS), methyltriethoxysilane (MTEOS), dimethyldiethoxysilane, tetramethoxysilane (TMOS), methyltrimethoxysilane (MTMOS), trimethoxysilane, dimethyldimethoxysilane, phenyltriethoxysilane (PTEOS); phenyltrimethoxysilane (PTMOS), diphenyldiethoxysilane, diphenyldimethoxysilane, trichlorosilane, methyltrichlorosilane, ethyltrichlorosilane, phenyltrichlorosilane, tetrachlorosilane, di-chlorosilane, methyldichlorosilane, dimethyldichlorosilane, chlorotriethoxysilane, chlorotrimethoxysilane, chloromethyltriethoxysilane, chloroethyltriethoxysilane, chlorophenyltriethoxysilane, chloromethyltrimethoxysilane, chloroethyltrimethoxysilane and chlorophenyltrimethoxysilane.

28. Composition according to any one of Claims 25 to 27, wherein the reactive silane is selected from triethoxysilane (HTEOS), tetraethoxysilane (TEOS), methyltriethoxysilane (MTEOS), tetramethoxysilane (TMOS), methyltrimethoxysilane (MTMOS), phenyltriethoxysilane (PEOS) and phenyltrimethoxysilane (PTMOS).

29. Composition according to any one of Claims 25 to 28, which comprises a solvent or solvent mixture.

30. Composition according to Claim 29, wherein the solvent or solvent mixture comprises at least one component selected from water, linear or branched alkyl alcohol having 1 to 6 carbon atoms, linear or branched ketone having 1 to 6 carbon atoms, linear or branched carboxylic acid ester having. 1 to 6 carbon atoms and linear or branched carboxylic acid amide having 1 to 6 carbon atoms.

31. Composition according to Claim 29 or 30, wherein the solvent or solvent mixture comprises at least one component. selected from water, acetone, 1-propanol, 2-propanol, butanol, methylisobutylketone, methoxypropanol, propoxypropanol, ethyl acetate and propyl acetate.

32. Composition according to any one of Claims 25 to 31, which comprises an aqueous solution of at least one protonic acid and/or an aqueous solution of at least one acid anhydride.

33. Composition according to Claim 32, wherein the protonic acid is nitric acid.

34. Method for the preparation of a polysiloxane composition, wherein a composition according to any one of Claims 25 to 33 is provided and the silyl alkyl ester is condensed with the reactive silane.

35. Method according to Claim 34, wherein the condensation of the silyl alkyl ester with the reactive silane is carried out by heating.

36. Method according to Claim 35, wherein the composition is heated for 1 to 24 hours, more preferably for 1 to 10 hours and yet more preferably for 2 to 6 hours at a temperature of 20 to 100°C, more preferably from 40 to 80°C and yet more preferably from 60 to 80°C.

37. Method according to any one of Claims 34 to 36, wherein during the condensation, polysiloxane having a low molecular weight and degree of cross-linking is formed, which is dissolved or suspended in the solvent or solvent mixture.

38. Method according _to any one of Claims 34 to 37, wherein during or after the condensation, a diluting solvent is added.

39. Method according to Claim 38, wherein the diluting solvent comprises at least one component selected from methanol, ethanol, 2-propanol, butanol, acetone, propyl acetate, ethyl lactate, propylene glycol propyl ether, diacetone alcohol and methoxypropanol.

40. Polysiloxane composition, which is obtainable by a method as defined, in any one of Claims 34 to 39.

41. Coated substrate, which is obtainable by a method comprising applying the composition as defined in any one of claims 25 to 33 or the polysiloxane composition as defined in claim 40 to the substrate and heating the substrata with the composition or polysiloxane composition applied thereon.

42. Coated substrate according to claim 41, wherein applying of said composition or said polysiloxane composition is performed by means of spin techniques.

43. Coated substrate according to claim 41 or 42, wherein the substrate is selected from a semiconductor device, a silicon-wafer, a glass plate and a metal plate.

44. Use of a composition as defined in any one of Claims 25 to 33 or of a polysiloxane composition as defined in Claim 40 for the preparation of a coating on a substrate.

45. Use according to Claim 44, wherein the composition or the polysiloxane composition is applied to the substrate and the substrate with said composition or polysiloxane composition applied thereon is heated.

46. Use according to Claim 44 or 45, wherein the composition or the polysiloxane composition is applied to the substrate by means of spin techniques.

47. Use according to any one of Claims 44 to 46, wherein the substrate is a semiconductor device or a silicon wafer.

48. Method for the photolithographic production of an integrated circuit pattern comprising the steps of:
(a) radiating a stack through a mask, said stack comprising the lower substrate, an upper photoresist layer, at least one anti-reflective layer formed from the composition as defined in any one of claims 25 to 33 or from the polysiloxane composition as defined in claim 40, and optionally at least one further layer to be structured, each being located between said substrate and said photoresist layer,
(b) developing the exposed stack to produce openings in said photoresist layer,
(c) etching a first pattern through said openings in said at least one anti-reflective layer and optionally at least one further layer to be structured, and
(d) stripping off said photoresist layer, at least one anti-reflective layer and optionally at least one further layer to be structured to produce the integrated circuit pattern.

49. Method according to claim 48, wherein the substrate is a sefi-conductor device or a silicon wafer.

50. Method according to claim 48 or 49, wherein in step (a) the stack is radiated with ultraviolet light having a wavelength of less than 260 nm, particularly 193 nm or 248 nm.

## Patentansprüche

1. Verfahren zur Herstellung eines Silylalkylesters, der die Formel(I) aufweist 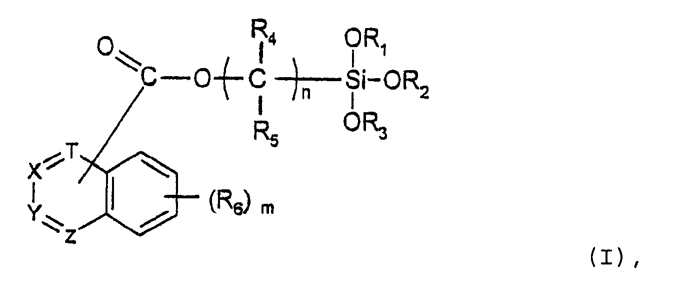 in der
R₁, R₂ und R₃ gleich oder verschieden sind und Alkyl, Aryl und Heteroaryl bedeuten,
R₄ und R₅ gleich oder verschieden sind und Wasserstoff, Halogen, Alkyl, Aryl und Heteroaryl bedeuten,
n eine ganze Zahl von 1 bis 10 ist,
R₆ ein Substituent ausgewählt aus Halogen, Alkyl, Aryl, Heteroaryl, Hydroxy, Alkoxy, Arylether, substituierter und unsubstituierter Aminogruppe, Carboxygruppe, Carbonsäureestergruppe, Carbonsäureamidgruppe, Sulfonsäuregruppe, Sulfonsäureestergruppe, Sulfonyl, Thio, Thioether und Nitro ist,
m eine ganze Zahl von 0 bis 4 ist,
T, X, Y und Z jeweils Kohlenstoff bedeuten,
eine Benzogruppe, die m-fach mit R₆ substituiert oder unsubstituiert ist, unter Bildung eines dreikernigen aromatischen Ringsystems an eine der Bindungen T-X, X-Y oder Y-Z kondensiert ist, wobei die Silylalkylestergruppe am mittleren Ring des dreikernigen aromatischen Ringsystems substituiert ist,
bei dem ein Carbonsäuresalz der Formel (II) 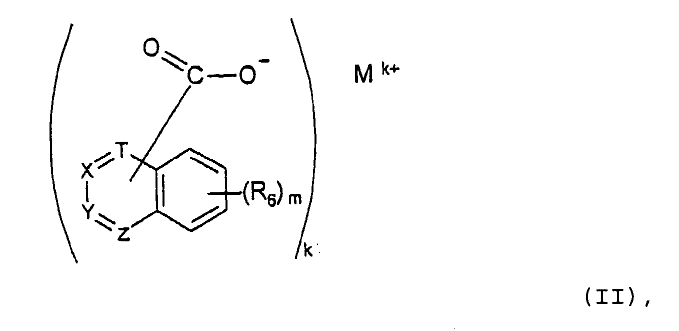 in der k eine ganze Zahl von 1 bis 4 ist und M ein Metall ist, mit einer Organosiliciumverbindung der Formel (III) 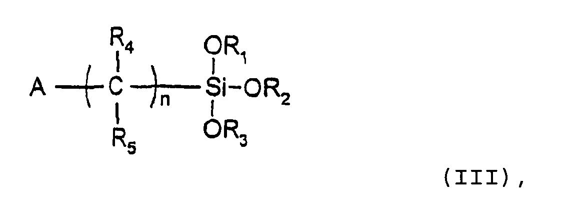 umgesetzt wird, in der A eine nucleofuge Abgangsgruppe darstellt.

2. Verfahren nach Anspruch 1, bei dem das Metall M ausgewählt ist aus den Gruppen Ia, IIa, IIIa, IVa, Ib, IIb, IVb und VIIIb des Periodensystems.

3. Verfahren nach Anspruch 1 oder 2, bei dem k = 1 ist.

4. Verfahren nach einem der Ansprüche 1 bis 3, bei dem M ausgewählt ist aus Metallen der Gruppe Ia.

5. Verfahren nach einem der Ansprüche 1 bis 4, bei dem das Metall M ausgewählt ist aus Lithium, Natrium und Kalium.

6. Verfahren nach einem der Ansprüche 1 bis 5, bei dem das Metall M Natrium und/oder Kalium und insbesondere Kalium ist.

7. Verfahren nach einem der Ansprüche 1 bis 6, bei dem die nucleofuge Abgangsgruppe A Halogen, vorzugsweise Chlor und/oder Brom und besonders bevorzugt Chlor bedeutet.

8. Verfahren nach einem der Ansprüche 1 bis 7, bei dem das Carbonsäuresalz der Formel (II) mit der Organosiliciumverbindung der Formel (III) in einem Lösungsmittel oder Lösungsmittelgemisch umgesetzt wird, aus dem das gebildete Metallsalz der Formel MA_{K} ausgefällt wird.

9. Verfahren nach Anspruch 8, bei dem als Lösungsmittel oder Lösungsmittelgemisch N,N-Dimethylformamid und/oder N,N-Dimethylacetamid verwendet wird.

10. Silylalkylester der Formel (I) 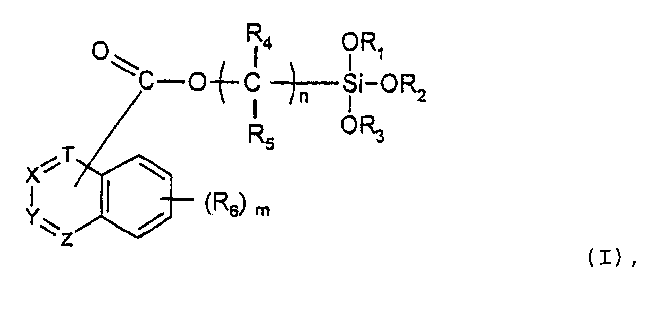 in der
R₁, R₂ und R₃ gleich oder verschieden sind und Alkyl, Aryl und Heteroaryl bedeuten,
R₄ und R₅ jeweils Wasserstoff bedeuten,
n eine ganze Zahl von 3 bis 5 ist,
R₆ ein Substituent ausgewählt aus Halogen, Alkyl, Aryl, Heteroaryl, Hydroxy, Alkoxy, Arylether, substituierter und unsubstituierter Aminogruppe, Carboxygruppe, Carbonsäureestergruppe, Carbonsäureamidgruppe, Sulfonsäuregruppe, Sulfonsäureestergruppe, Sulfonyl, Thio, Thioether und Nitro ist,
m eine ganze Zahl von 0 bis 4 ist,
T, X, Y und Z jeweils Kohlenstoff bedeuten,
eine Benzogruppe, die m-fach mit R₆ substituiert oder unsubstituiert ist, unter Bildung eines dreikernigen aromatischen Ringsystems an eine der Bindungen T-X, X-Y oder Y-Z kondensiert ist, wobei die Silylalkylestergruppe am mittleren Ring des dreikernigen aromatischen Ringsystems substituiert ist,
mit der Maßgabe, dass, wenn m 0 ist und eine unsubstituierte Benzogruppe an der X-Y-Bindung kondensiert ist, dann bedeuten nicht alle R₁, R₂ und R₃ Alkyl.

11. Silylalkylester nach Anspruch 10, bei dem R₁, R₂ und R₃ jeweils Alkyl bedeuten.

12. Silylalkylester nach Anspruch 10 oder 11, bei dem R₁, R₂ und R₃ unabhängig voneinander ausgewählt sind aus Methyl, Ethyl, n-Propyl, Isopropyl, n-Butyl, 2-Methylpropyl, 1-Methylpropyl und 1,1-Dimethylethyl.

13. Silylalkylester nach einem der Ansprüche 10 bis 12, bei dem R₁, R₂ und R₃ jeweils Methyl oder Ethyl bedeuten.

14. Silylalkylester nach einem der Ansprüche 10 bis 13, bei dem eine Benzogruppe, die m-fach mit R₆ substituiert oder die unsubstituiert ist, an der X-Y-Bindung kondensiert ist.

15. Silylalkylester nach Anspruch 14, bei dem eine unsubstituierte Benzogruppe an der X-Y-Bindung kondensiert ist und m = 0 ist.

16. Silylalkylester nach einem der Ansprüche 10 bis 13, bei dem eine Benzogruppe, die m-fach mit R₆ substituiert oder die unsubstituiert ist, entweder an der T-X- oder an der Y-Z-Bindung kondensiert ist.

17. Silylalkylester nach Anspruch 16, bei dem eine unsubstituierte Benzogruppe entweder an der T-X- oder Y-Z-Bindung kondensiert ist und m = 0 ist.

18. Silylalkylester der Formel (I) 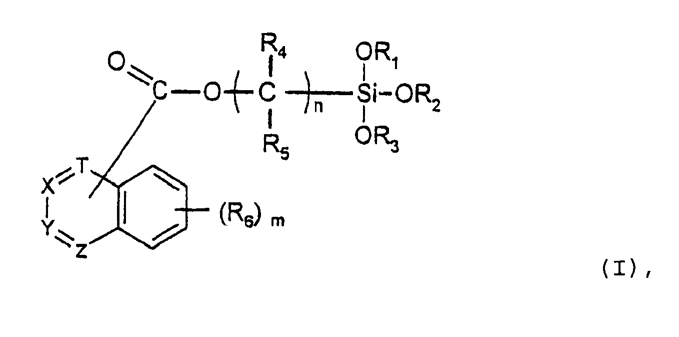 in der
R₁, R₂ und R₃ gleich oder verschieden sind und Alkyl, Aryl und Heteroaryl bedeuten,
R₄ und R₅ gleich oder verschieden sind und Wasserstoff, Halogen, Alkyl, Aryl und Heteroaryl bedeuten,
n eine ganze Zahl von 1 bis 10 ist,
R₆ ein Substituent ausgewählt aus Halogen, Alkyl, Aryl, Heteroaryl, Hydroxy, Alkoxy, Arylether, substituierter und unsubstituierter Aminogruppe, Carboxygruppe, Carbonsäureestergruppe, Carbonsäureamidgruppe, Sulfonsäuregruppe, Sulfonsäureestergruppe, Sulfonyl, Thio, Thioether und Nitro ist,
m eine ganze Zahl von 0 bis 4 ist,
T, X, Y und Z jeweils Kohlenstoff bedeuten,
eine Benzogruppe, die m-fach mit R₆ substituiert oder unsubstituiert ist, unter Bildung eines dreikernigen aromatischen Ringsystems entweder an der T-X- oder der Y-Z-Bindung kondensiert ist, wobei die Silylalkylestergruppe am mittleren Ring des dreikernigen aromatischen Ringsystems substituiert ist.

19. Silylalkylester nach Anspruch 18, bei dem R₁, R₂ und R₃ jeweils Alkyl bedeuten.

20. Silylalkylester nach Anspruch 18, bei dem R₁, R₂ und R₃ unabhängig voneinander ausgewählt sind aus Methyl, Ethyl, n-Propyl, Isopropyl, n-Butyl, 2-Methylpropyl, 1-Methylpropyl und 1,1-Dimethylethyl.

21. Silylalkylester nach einem der Ansprüche 18 bis 20, bei dem R₁, R₂ und R₃ jeweils Methyl oder Ethyl bedeuten.

22. Silylalkylester nach einem der Ansprüche 18 bis 21, bei dem R₄ und R₅ jeweils Wasserstoff bedeuten.

23. Silylalkylester nach einem der Ansprüche 18 bis 22, bei dem n eine ganze Zahl von 1 bis 5, insbesondere von 1 bis 3, besonders bevorzugt 1 oder 3 und am meisten bevorzugt 3 ist.

24. Silylalkylester nach einem der Ansprüche 18 bis 23, bei dem eine unsubstituierte Benzogruppe entweder an der T-X- oder Y-Z-Bindung kondensiert ist und m = 0 ist.

25. Zusammensetzung, die mindestens einen Silylalkylester gemäß einem der Ansprüche 10 bis 24 und mindestens ein weiteres reaktives Silan enthält.

26. Zusammensetzung nach Anspruch 25, in der das reaktive Silan ausgewählt ist aus Alkoxysilanen und Halogensilanen, insbesondere Chlorsilanen.

27. Zusammensetzung nach Anspruch 25 oder 26, in der das reaktive Silan ausgewählt ist aus Triethoxysilan (HTEOS), Tetraethoxysilan (TEOS), Methyltriethoxysilan (MTEOS), Dimethyldiethoxysilan, Tetramethoxysilan (TMOS), Methyltrimethoxysilan (MTMOS), Trimethoxysilan, Dimethyldimethoxysilan, Phenyltriethoxysilan (PTEOS), Phenyltrimethoxysilan (PTMOS), Diphenyldiethoxysilan, Diphenyldimethoxysilan, Trichlorsilan, Methyltrichlorsilan, Ethyltrichlorsilan, Phenyltrichlorsilan, Tetrachlorsilan, Dichlorsilan, Methyldichlorsilan, Dimethyldichlorsilan, Chlortriethoxysilan, Chlortrimethoxysilan, Chlormethyltriethoxysilan, Chlorethyltriethoxysilan, Chlorphenyltriethoxysilan, Chlormethyltrimethoxysilan, Chlorethyltrimethoxysilan und Chlorphenyltrimethoxysilan.

28. Zusammensetzung nach einem der Ansprüche 25 bis 27, in der das reaktive Silan ausgewählt ist aus Triethoxysilan (HTEOS), Tetraethoxysilan (TEOS), Methyltriethoxysilan (MTEOS), Tetramethoxysilan (TMOS), Methyltrimethoxysilan (MTMOS), Phenyltriethoxysilan (PEOS) und Phenyltrimethoxysilan (PTMOS).

29. Zusammensetzung nach einem der Ansprüche 25 bis 28, die ein Lösungsmittel oder ein Lösungsmittelgemisch enthält.

30. Zusammensetzung nach Anspruch 29, in der das Lösungsmittel oder Lösungsmittelgemisch mindestens eine Komponente ausgewählt aus Wasser, geradkettigem oder verzweigtem Alkylalkohol mit 1 bis 6 Kohlenstoffatomen, geradkettigem oder verzweigtem Keton mit 1 bis 6 Kohlenstoffatomen, geradkettigem oder verzweigtem Carbonsäureester mit 1 bis 6 Kohlenstoffatomen und geradkettigem oder verzweigtem Carbonsäureamid mit 1 bis 6 Kohlenstoffatomen enthält.

31. Zusammensetzung nach Anspruch 29 oder 30, in der das Lösungsmittel oder Lösungsmittelgemisch mindestens eine Komponente ausgewählt aus Wasser, Aceton, 1-Propanol, 2-Propanol, Butanol, Methylisobutylketon, Methoxypropanol, Propoxypropanol, Ethylacetat und Propylacetat enthält.

32. Zusammensetzung nach einem der Ansprüche 25 bis 31, die eine wässrige Lösung von mindestens einer Protonensäure und/oder eine wässrige Lösung von mindestens einem Säureanhydrid enthält.

33. Zusammensetzung nach Anspruch 32, in der die Protonensäure Salpetersäure ist.

34. Verfahren zur Herstellung einer Polysiloxanzusammensetzung, bei dem eine Zusammensetzung gemäß einem der Ansprüche 25 bis 33 zur Verfügung gestellt und der Silylalkylester mit dem reaktiven Silan kondensiert wird.

35. Verfahren nach Anspruch 34, bei dem die Kondensation des Silylalkylesters mit dem reaktiven Silan durch Erwärmung durchgeführt wird.

36. Verfahren nach Anspruch 35, bei dem die Zusammensetzung 1 bis 24 Stunden, insbesondere 1 bis 10 Stunden und besonders bevorzugt 2 bis 6 Stunden bei einer Temperatur von 20 bis 100 °C, insbesondere 40 bis 80 °C und besonders bevorzugt 60 bis 80 °C erwärmt wird.

37. Verfahren nach einem der Ansprüche 34 bis 36, bei dem während der Kondensation Polysiloxan mit niedrigem Molekulargewicht und Vernetzungsgrad gebildet wird, das im Lösungsmittel oder Lösungsmittelgemisch gelöst oder suspendiert ist.

38. Verfahren nach einem der Ansprüche 34 bis 37, bei dem während oder nach der Kondensation ein Verdünnungslösungsmittel zugegeben wird.

39. Verfahren nach Anspruch 38, bei dem das Verdünnungslösungsmittel mindestens eine Komponente ausgewählt aus Methanol, Ethanol, 2-Propanol, Butanol, Aceton, Propylacetat, Ethyllactat, Propylenglykolpropylether, Diacetonalkohol und Methoxypropanol enthält.

40. Polysiloxanzusammensetzung, die durch ein Verfahren gemäß einem der Ansprüche 34 bis 39 erhältlich ist.

41. Beschichtetes Substrat, das durch ein Verfahren erhältlich ist, bei dem die Zusammensetzung gemäß einem der Ansprüche 25 bis 33 oder die Polysiloxanzusammensetzung gemäß Anspruch 40 auf das Substrat aufgebracht wird und das Substrat mit der darauf aufgebrachten Zusammensetzung oder Polysiloxanzusammensetzung erwärmt wird.

42. Beschichtetes Substrat nach Anspruch 41, bei dem das Aufbringen der Zusammensetzung oder der Polysiloxanzusammensetzung mittels Schleudertechniken (spin techniques) durchgeführt wird.

43. Beschichtetes Substrat nach Anspruch 41 oder 42, bei dem das Substrat ausgewählt ist aus einer Halbleitervorrichtung, einem Silicium-Wafer, einer Glasplatte und einer Metallplatte.

44. Verwendung einer Zusammensetzung gemäß einem der Ansprüche 25 bis 33 oder einer Polysiloxanzusammensetzung gemäß Anspruch 40 zur Herstellung einer Beschichtung auf einem Substrat.

45. Verwendung nach Anspruch 44, bei der die Zusammensetzung oder die Polysiloxanzusammensetzung auf das Substrat aufgebracht und das Substrat mit der darauf aufgebrachten Zusammensetzung oder Polysiloxanzusammensetzung erwärmt wird.

46. Verwendung nach Anspruch 44 oder 45, bei der die Zusammensetzung oder die Polysiloxanzusammensetzung durch Sschleudertechniken auf das Substrat aufgebracht wird.

47. Verwendung nach einem der Ansprüche 44 bis 46, bei der das Substrat eine Halbleitervorrichtung oder ein Silicium-Wafer ist.

48. Verfahren zur photolithographischen Herstellung eines integrierten Schaltkreismusters, bei dem
(a) durch eine Maske ein Stapel bestrahlt wird, der das untenliegende Substrat, eine obenliegende Photoresistschicht, mindestens eine aus der Zusammensetzung gemäß einem der Ansprüche 25 bis 33 oder der Polysiloxanzusammensetzung gemäß Anspruch 40 gebildete antireflektierende Schicht und gegebenenfalls mindestens eine weitere zu strukturierende Schicht enthält, wobei jede zwischen dem Substrat und der Photoresistschicht angeordnet ist,
(b) der bestrahlte Stapel entwickelt wird, um Öffnungen in der Photoresistschicht herzustellen,
(c) durch die Öffnungen in die mindestens eine antireflektierende Schicht und gegebenenfalls mindestens eine weitere zu strukturierenden Schicht ein erstes Muster geätzt wird und
(d) die Photoresistschicht, mindestens eine antireflektierende Schicht und gegebenenfalls mindestens eine weitere zu strukturierende Schicht gestrippt wird, um das integrierte Schaltkreismuster herzustellen.

49. Verfahren nach Anspruch 48, bei dem das Substrat eine Halbleitervorrichtung oder ein Silicium-Wafer ist.

50. Verfahren nach Anspruch 48 oder 49, bei dem in Schritt (a) der Stapel mit ultraviolettem Licht mit einer Wellenlänge von weniger als 260 nm, insbesondere 193 nm oder 248 nm, bestrahlt wird.

## Revendications

1. Méthode de préparation d'un ester silylalkylique de formule (I) 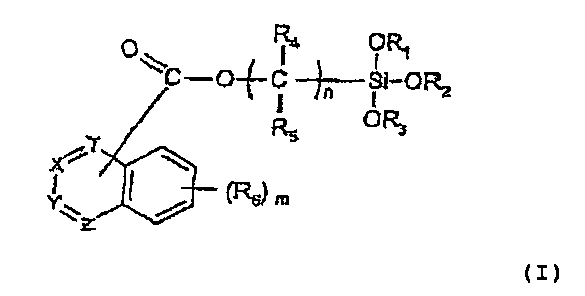 dans laquelle :
R₁, R₂ et R₃ sont identiques ou différents et représentent un groupe alkyle, un groupe aryle et un groupe hétéroaryle,
R₄ et R₅ sont identiques ou différents et représentent un atome d'hydrogène, un atome d'halogène, un groupe alkyle, un groupe aryle et un groupe hétéroaryle,
n est un entier de 1 à 10,
R₆ est un substituant choisi parmi un atome d'halogène, un groupe alkyle, un groupe aryle, un groupe hétéroaryle, un groupe hydroxy, un groupe alcoxy, un groupe étherarylique, un groupe amino substitué et non-substitué, un groupe carboxy, un groupe ester d'acide carboxylique, un groupe amide d'acide carboxylique, un groupe acide sulfonique, un groupe ester d'acide sulfonique, un groupe sulfonyle, un groupe thio, un groupe thioéther et un groupe nitro,
m est un entier de 0 à 4,
T, X, Y et Z représentent chacun un atome de carbone,
un groupe benzo, qui est substitué m fois par R₆ ou qui est non-substitué, est condensé sur l'une des liaisons T-X, X-Y ou Y-Z, en vue de former un système de noyau aromatique trinucléaire, où le groupe ester silylalkylique est substitué au niveau du noyau du milieu dudit système de noyau aromatique trinucléaire,
dans laquelle un sel d'acide carboxylique de formule (II) 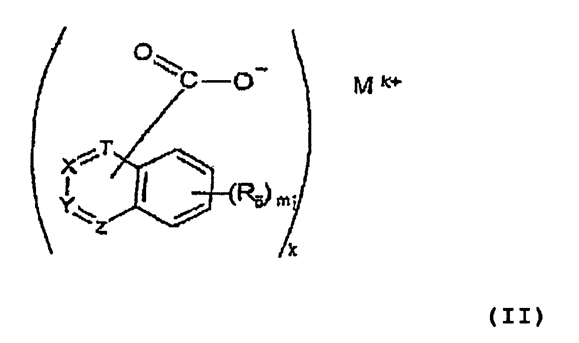 dans laquelle K est un entier de 1 à 4 et M est un métal,
est mis à réagir avec un composé organosilicié de formule (III) 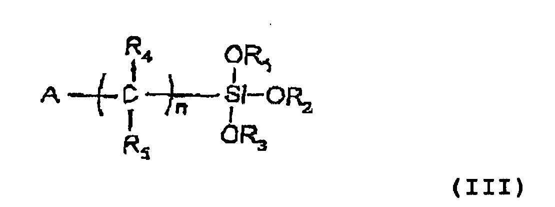 dans laquelle A représente un groupe partant nucléofuge.

2. Méthode selon la revendication 1, dans laquelle le métal M est choisi parmi les groupes Ia, IIa, IIIa, IVa, Ib, IIb, IVb et VIIIb du tableau périodique.

3. Méthode selon la revendication 1 ou 2, dans laquelle k vaut 1.

4. Méthode selon l'une quelconque des revendications 1 à 3, dans laquelle M est choisi parmi des métaux du groupe Ia.

5. Méthode selon l'une quelconque des revendications 1 à 4, dans laquelle le métal M est choisi parmi le lithium, le sodium et le potassium.

6. Méthode selon l'une quelconque des revendications 1 à 5, dans laquelle le métal M est le sodium et/ou le potassium, et en particulier le potassium.

7. Méthode selon l'une quelconque des revendications 1 à 6, dans laquelle le groupe partant nucléofuge A représente un atome d'halogène, de préférence un atome de chlore et/ou un atome de brome, et encore plus préférablement un atome de chlore.

8. Méthode selon l'une quelconque des revendications 1 à 7, dans laquelle le sel d'acide carboxylique de formule (II) est mis à réagir avec le composé organosilicié de formule (III) dans un solvant ou un mélange de solvants, à partir duquel le sel métallique de formule MA_{K} formé est précipité.

9. Méthode selon la revendication 8, dans laquelle le N,N-diméthylformamide et/ou le N,N-diméthylacétamide sont utilisés en tant que solvant ou mélange de solvants.

10. Ester silylalkylique de formule (I) 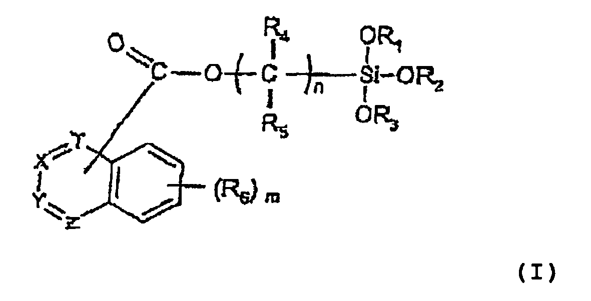 dans laquelle :
R₁, R₂ et R₃ sont identiques ou différents et représentent un groupe alkyle, un groupe aryle et un groupe hétéroaryle,
R₄ et R₅ représentent chacun un atome d'hydrogène,
n est un entier de 3 à 5,
R₆ est un substituant choisi parmi un atome d'halogène, un groupe alkyle, un groupe aryle, un groupe hétéroaryle, un groupe hydroxy, un groupe alcoxy, un groupe étherarylique, un groupe amino substitué et non-substitué, un groupe carboxy, un groupe ester d'acide carboxylique, un groupe amide d'acide carboxylique, un groupe acide sulfonique, un groupe ester d'acide sulfonique, un groupe sulfonyle, un groupe thio, un groupe thioéther et un groupe nitro,
m est un entier de 0 à 4,
T, X, Y et Z représentent chacun un atome de carbone,
un groupe benzo, qui est substitué m fois par R₆ ou qui est non-substitué, est condensé sur l'une des liaisons T-X, X-Y ou Y-Z, en vue de former un système de noyau aromatique trinucléaire, où le groupe ester silylalkylique est substitué au niveau du noyau du milieu dudit système de noyau aromatique trinucléaire, à condition que lorsque m vaut 0 et un groupe benzo non-substitué est condensé sur la liaison X-Y, alors R₁, R₂ et R₃ ne représentent pas tous un groupe alkyle.

11. Ester silylalkylique selon la revendication 10, dans lequel R₁, R₂ et R₃ représentent chacun un groupe alkyle.

12. Ester silylalkylique selon la revendication 10 ou 11, dans lequel R₁, R₂ et R₃ sont choisis, indépendamment les uns des autres, parmi un groupe méthyle, un groupe éthyle, un groupe n-propyle, un groupe isopropyle, un groupe n-butyle, un groupe 2-méthylpropyle, un groupe 1-méthylpropyle et un groupe 1,1-diméthyléthyle.

13. Ester silylalkylique selon l'une quelconque des revendications 10 à 12, dans lequel R₁, R₂ et R₃ représentent chacun un groupe méthyle ou un groupe éthyle.

14. Ester silylalkylique selon l'une quelconque des revendications 10 à 13, dans lequel un groupe benzo, qui est substitué m fois par R₆ ou qui est non-substitué, est condensé sur la liaison X-Y.

15. Ester silylalkylique selon la revendication 14,
dans lequel un groupe benzo non-substitué est condensé sur la liaison X-Y et m vaut 0.

16. Ester silylalkylique selon l'une quelconque des revendications 10 à 13, dans lequel un groupe benzo, qui est substitué m fois par R₆ ou qui est non-substitué, est condensé sur la liaison soit T-X, soit Y-Z.

17. Ester silylalkylique selon la revendication 16, dans lequel un groupe benzo non-substitué est condensé sur la liaison soit T-X, soit Y-Z, et m vaut 0.

18. Ester silylalkylique de formule (I) 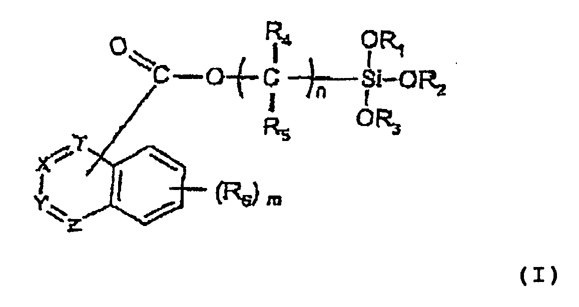 dans laquelle :
R₁, R₂ et R₃ sont identiques ou différents et représentent un groupe alkyle, un groupe aryle et un groupe hétéroaryle,
R₄ et R₅ sont identiques ou différents et représentent un atome d'hydrogène, un atome d'halogène, un groupe alkyle, un groupe aryle et un groupe hétéroaryle,
n est un entier de 1 à 10,
R₆ est un substituant choisi parmi un atome d'halogène, un groupe alkyle, un groupe aryle, un groupe hétéroaryle, un groupe hydroxy, un groupe alcoxy, un groupe étherarylique, un groupe amino substitué et non-substitué, un groupe carboxy, un groupe ester d'acide carboxylique, un groupe amide d'acide carboxylique, un groupe acide sulfonique, un groupe ester d'acide sulfonique, un groupe sulfonyle, un groupe thio, un groupe thioéther et un groupe nitro,
m est un entier de 0 à 4,
T, X, Y et Z représentent chacun un atome de carbone,
un groupe benzo, qui est substitué m fois par R₆ ou qui est non-substitué, est condensé sur la liaison soit T-X, soit Y-Z, en vue de former un système de noyau aromatique trinucléaire, où le groupe ester silylalkylique est substitué au niveau du noyau du milieu dudit système de noyau aromatique trinucléaire.

19. Ester silylalkylique selon la revendication 18, dans lequel R₁, R₂ et R₃ représentent chacun un groupe alkyle.

20. Ester silylalkylique selon la revendication 18 ou 19, dans lequel R₁, R₂ et R₃ sont choisis, indépendamment les uns des autres, parmi un groupe méthyle, un groupe éthyle, un groupe n-propyle, un groupe isopropyle, un groupe n-butyle, un groupe 2-méthylpropyle, un groupe 1-méthylpropyle et un groupe 1,1-diméthyléthyle.

21. Ester silylalkylique selon l'une quelconque des revendications 18 à 20, dans lequel R₁, R₂ et R₃ représentent chacun un groupe méthyle ou un groupe éthyle.

22. Ester silylalkylique selon l'une quelconque des revendications 18 à 21, dans lequel R₄ et R₅ représentent chacun un atome d'hydrogène.

23. Ester silylalkylique selon l'une quelconque des revendications 18 à 22, dans lequel n est un entier de 1 à 5, en particulier de 1 à 3, encore plus préférablement valant 1 ou 3, et le plus préférablement valant 3.

24. Ester silylalkylique selon l'une quelconque des revendications 18 à 23, dans lequel un groupe benzo non-substitué est condensé sur la liaison soit T-X, soit Y-Z, et m vaut 0.

25. Composition comprenant au moins un ester silylalkylique selon l'une quelconque des revendications 10 à 24 et au moins un silane réactif supplémentaire.

26. Composition selon la revendication 25, dans laquelle le silane réactif est choisi parmi des alcoxysilanes et des halogénosilanes, en particulier des chlorosilanes.

27. Composition selon la revendication 25 ou 26, dans laquelle le silane réactif est choisi parmi le triéthoxysilane (HTEOS), le tétraéthoxysilane (TEOS), le méthyltriéthoxysilane (MTEOS), le diméthyldiéthoxysilane, le tétraméthoxysilane (TMOS), le méthyltriméthoxysilane (MTMOS), le triméthoxysilane, le diméthyldiméthoxysilane, le phényltriéthoxysilane (PTEOS), le phényltriméthoxysilane (PTMOS), le diphényldiéthoxysilane, le diphényldiméthoxysilane, le trichlorosilane, le méthyltrichlorosilane, l'éthyltrichlorosilane, le phényltrichlorosilane, le tétrachlorosilane, le dichlorosilane, le méthyldichlorosilane, le diméthyldichlorosilane, le chlorotriéthoxysilane, le chlorotriméthoxysilane, le chlorométhyltriéthoxysilane, le chloroéthyltriéthoxysilane, le chlorophényltriéthoxysilane, le chlorométhyltriméthoxysilane, le chloroéthyltriméthoxysilane et le chlorophényltriméthoxysilane.

28. Composition selon l'une quelconque des revendications 25 à 27, dans laquelle le silane réactif est choisi parmi le triéthoxysilane (HTEOS), le tétraéthoxysilane (TEOS), le méthyltriéthoxy-silane (MTEOS), le tétraméthoxysilane (TMOS), le méthyltriméthoxysilane (MTMOS), le phényltriéthoxysilane (PEOS) et le phényltriméthoxysilane.

29. Composition selon l'une quelconque des revendications 25 à 28, comprenant un solvant ou un mélange de solvants.

30. Composition selon la revendication 29, dans laquelle le solvant ou le mélange de solvants comprend au moins un composant choisi parmi l'eau, un alcool alkylique linéaire ou ramifié renfermant de 1 à 6 atomes de carbone, une cétone linéaire ou ramifiée renfermant de 1 à 6 atomes de carbone, un ester d'acide carboxylique linéaire ou ramifié renfermant de 1 à 6 atomes de carbone et un amide d'acide carboxylique linéaire ou ramifié renfermant de 1 à 6 atomes de carbone.

31. Composition selon la revendication 29 ou 30, dans laquelle le solvant ou le mélange de solvants comprend au moins un composant choisi parmi l'eau, l'acétone, le 1-propanol, le 2-propanol, le butanol, la méthylisobutylcétone, le méthoxypropanol, le propoxypropanol, l'acétate d'éthyle et l'acétate de propyle.

32. Composition selon l'une quelconque des revendications 25 à 31, comprenant une solution aqueuse d'au moins un acide protonique et/ou une solution aqueuse d'au moins un anhydride d'acide.

33. Composition selon la revendication 32, dans laquelle l'acide protonique est l'acide nitrique.

34. Méthode de préparation d'une composition de polysiloxane, dans laquelle une composition selon l'une quelconque des revendications 25 à 33 est procurée et l'ester silylalkylique est condensé avec le silane réactif.

35. Méthode selon la revendication 34, dans laquelle la condensation de l'ester silylalkylique avec le silane réactif est effectuée par chauffage.

36. Méthode selon la revendication 35, dans laquelle la composition est chauffée pendant de 1 à 24 heures, plus préférablement pendant de 1 à 10 heures, et encore plus préférablement pendant de 2 à 6 heures à une température de 20 à 100°C, plus préférablement de 40 à 80°C, et encore plus préférablement de 60 à 80°C.

37. Méthode selon l'une quelconque des revendications 34 à 36, dans laquelle, durant la condensation, un polysiloxane présentant un faible poids moléculaire et un faible degré de réticulation est formé, lequel est dissous ou mis en suspension dans le solvant ou le mélange de solvants.

38. Méthode selon l'une quelconque des revendications 34 à 37, dans laquelle, durant ou après la condensation, un solvant diluant est ajouté.

39. Composition selon la revendication 38, dans laquelle le solvant diluant comprend au moins un composant choisi parmi le méthanol, l'éthanol, le 2-propanol, le butanol, l'acétone, l'acétate de propyle, le lactate d'éthyle, l'éther propylique de propylène glycol, l'alcool de diacétone et le méthoxypropanol.

40. Composition de polysiloxane qui peut être obtenue par une méthode telle que définie dans l'une quelconque des revendications 34 à 39.

41. Substrat revêtu qui peut être obtenu par une méthode comprenant l'application de la composition telle que définie dans l'une quelconque des revendications 25 à 33, ou de la composition de polysiloxane telle que définie dans la revendication 40, sur le substrat, et le chauffage du substrat avec la composition ou la composition de polysiloxane appliquée par-dessus.

42. Substrat revêtu selon la revendication 41, où l'application de ladite composition de polysiloxane est réalisée au moyen de techniques de centrifugation.

43. Substrat revêtu selon la revendication 41 ou 42, où le substrat est choisi parmi un dispositif à semi-conducteur, une tranche de silicium, une plaque de verre et une plaque métallique.

44. Utilisation d'une composition telle que définie dans l'une quelconque des revendications 25 à 33, ou d'une composition de polysiloxane telle que définie dans la revendication 40, pour la préparation d'un revêtement sur un substrat.

45. Utilisation selon la revendication 44, dans laquelle la composition ou la composition de polysiloxane est appliquée sur le substrat, et le substrat sur lequel est appliquée ladite composition ou composition de polysiloxane est chauffée.

46. Utilisation selon la revendication 44 ou 45, dans laquelle la composition ou la composition de polysiloxane est appliquée sur le substrat au moyen de techniques de centrifugation.

47. Utilisation selon l'une quelconque des revendications 44 à 46, dans laquelle le substrat est un dispositif à semi-conducteur ou une tranche de silicium.

48. Méthode de production photolithographique d'une configuration de circuit intégré, comprenant les étapes consistant à :
(a) irradier une pile à travers un masque, ladite pile comprenant le substrat inférieur, une couche supérieure de photorésist, au moins une couche anti-réfléchissante formée à partir de la composition telle que définie dans l'une quelconque des revendications 25 à 33 ou à partir de la composition de polysiloxane telle que définie dans la revendication 40, et éventuellement au moins une couche supplémentaire destinée à être structurée, chacune étant située entre ledit substrat et ladite couche de photorésist,
(b) développer la pile exposée en vue de produire des ouvertures dans ladite couche de photorésist,
(c) graver une première configuration à travers lesdites ouvertures dans lesdites au moins une couche anti-réfléchissante et éventuellement au moins une couche suplémentaire destinée à être structurée, et
(d) enlever lesdites couche de photorésist, au moins une couche anti-réfléchissante et éventuellement au moins une couche supplémentaire destinée à être structurée, en vue de produire la configuration de circuit intégré.

49. Méthode selon la revendication 48, dans laquelle le substrat est un dispositif à semi-conducteur ou une tranche de silicium.

50. Méthode selon la revendication 48 ou 49, dans laquelle, dans l'étape (a), la pile est irradiée avec de la lumière ultraviolette présentant une longueur d'onde inférieure à 260 nm, en particulier de 193 nm ou 248 nm.
